# EUROPEAN PATENT APPLICATION

(11) **EP 0 669 159 A1**
(43) Date of publication of application: **30.08.1995**
(21) Application number: 95102588.1
(22) Date of filing: 23.02.1995
(51) Int. Cl.: B01D 65/02, B01D 65/06

(54) **Back wash method for filtration modules using internally pressurized hollow fibers**

(30) Priority: 25.02.1994 JP 52873/94
(71) Applicant: DIC Degrémont KK, Tokyo (JP)
(72) Inventor: Moulart, Pierre, c/o DIC Degrémont K.K., Tokyo (JP)
(74) Representative: VOSSIUS & PARTNER

(57) **Abstract**

A method for back washing of filtration modules using internally pressurized hollow fibers, said method being applied in a water purification process for example. The method requires a shorter time and consumes less water than the conventional one, but is very efficient in removing particles accumulated on the inner surface of the filtration tubes.

In a water purification process using an internally pressurized hollow fiber type filtration module (4), the turbid raw water containing organic or inorganic matter enters the module for filtration. The exiting filtered water is sent to a wash water tank (11). When the inner surface of the filtration tubes becomes clogged, a chloride solution is added (15, 16) to the filtered water taken from the wash water tank (11), and sent to the filtration module to carry out a back wash. According to the invention, in order to remove even more efficiently particles accumulated on the inner surface of the filtration tubes, air is blown (18, 22) through one of the outlets of the filtration module, for example through the concentrated water outlet (6) and evacuated (24) through the raw water inlet (5). The pressure and flowrate of the air blow is preferably such as the air flow within the tubes is turbulent. The efficiency of the process is high because drops of wash water oozing on the inner surface of the tubes are accelerated by the air flow, knocking on the particles accumulated on the surface and blowing them away.

## Description

The present invention relates to a back wash method for internally pressurized hollow fiber type filtration modules, especially to a method, for back washing of internally pressurized hollow fiber type filtration modules applied to drinking water treatment.

The filtration method using hollow fibers is a well-known method already applied in desalination of sea water, production of pure water, treatment of excrements, secondary treatment of waste water, etc. When applied to drinking water purification, this method achieves a direct separation without the need of any coagulation-sedimentation stage for collecting suspended solids, enabling water treating plants to be more compact and their control easier. As it has recently become difficult to find place for such conventional installations, hollow fiber filtration techniques are often considered, and several plants are already under operation. Moreover, this method is very attractive as it enables to carry out filtrations that are impossible with other techniques, such as the elimination of bacteria or Viruses, and active research is under way.

In the case of drinking water purification, porous materials with microscopic pores of 0.01-0.5 /1.m (polyethylene, polysulphone, polyacrylnitrile, acetylcellulose, etc,) are used to make hollow fibers of about 1.0mm in diameter, and these long fibers are cut into pieces of about 1 m in length, then assembled into modules of several thousands pieces each. Raw water containing organic or inorganic colloidal particles is fed under pressure into the raw water inlet of said hollow fiber type filtration module, and water flowing out of the concentrated water outlet is recirculated. By repeating the process, solid-liquid separation is achieved and filtered water is sent to the water distribution pond. Suspended or colloidal particles progressively accumulate to the inner surface of the fibers and eventually clog them, causing the filtration efficiency to drop abruptly. A cleaning of the hollow fibers is then necessary. It can be carried out on a regular basis or when the flow of filtrated water becomes less than a given value, or when the pressure increase through the filtration module more than a given value. Generally, water used for the back wash process is water filtrated during the process. A special tank is provided for that purpose ahead of the water distribution pond. When clogging occurs, back wash water is injected through the filtrated water outlet of the module, passing through the surface of the fibers and causing particles accumulated on their inner surfaces to be detached. Water is then evacuated through one end of the fibers for instance the module's raw water inlet side. However, if bacteria or other relatively sticky particles adhere to the surface, or if colloidal iron hydroydes are clogging the pores of the membrane, it is impossible to remove them in a short time only with water. In that case, several ppm of a chloride, for example natrium hypochlorite, are added to back wash water. Generally, this back wash process is carried out during 15s to 1 mn, after 10mn to 1 hour of normal filtration. If unsufficient, a wash process using chemicals is carried out. Usually, detergents such as citric acid are used as chemicals.

A back wash is more efficient with a short duration and a small quantity of filtrated water used as wash water. Moreover, as a wash process using chemicals takes more time and consumes more water, it is preferable to increase the duration of its cycle. However this cycle depends on the way the back wash process is carried out. In the case of the back wash described above, the filtration capacity recovery would be improved by using a large quantity of water during a long time. But there are limitations on the duration and quantity of water in terms of process efficiency and, consequently, the elimination of attached particles is not complete. That is the reason why it is difficult with conventional back wash methods to increase the duration of the cycle.

The present invention has for its object to provide a method for back wash of internally pressurized hollow fiber type filtration modules which enables to restore the filtration capacity of the module in a short period of time without the need to increase the quantity of water to be used.

The problem described above is solved by using a method for back wash of internally pressurized hollow fiber type filtration modules, method which is characterized in that, by injecting back wash water-pressurized or not-through the filtered water outlet and air through a first port of the above module, accumulated particles are detached from the inner surface of the fibers and evacuated through a second port.

The first port of the internally pressurized hollow fiber type module through which air is blown can be the concentrated water outlet, and the second port through which particles detached from the inner surface during the back wash are eliminated along with the wash water can be the raw water inlet, but the contrary is also possible. In the case of a vertical module, it is possible to simply use the gravity for draining through the raw water inlet the concentrated water remaining inside the fibers, thus allowing to quicken the process and to use a lower air pressure for the back wash.

It is preferable to blow a quantity of air sufficient to create a turbulent flow inside the hollow fibers, the inner diameter of which is about 1 mm.

Pressure back wash water shall be injected at first, but it is possible to switch afterwards to unpressurized water if the flow of filtered water rein- creases smoothly.

Furthermore, in order to remove sticky bacteria or like attached to the inner surface of the hollow fibers as well as colloidal iron hydroxydes clogging the pores, it is possible to inject a chlorine solution.

As the inside of the hollow fibers is, due to the air flow, at a lower pressure than the outside (even if pressure wash water is not used), wash water injected from the outside begins to ooze through the pores which have become microscopic due to the clogging. Filtered particles accumulated on the inner surface of the fibers begin to get detached and are blown away by the air flow together with oozed water drops.

In conventional methods, it is only by the effect of the wash water pressure that accumulated particles are detached from the inner surface of the fibers and blown a way together with the wash water. The proposed system, characterized in that air is blown within the fibers, enables to improve the efficiency of the wash process while shortening the process and reducing the quantity of filtered water needed as wash water.

### Brief Description of the Drawings:

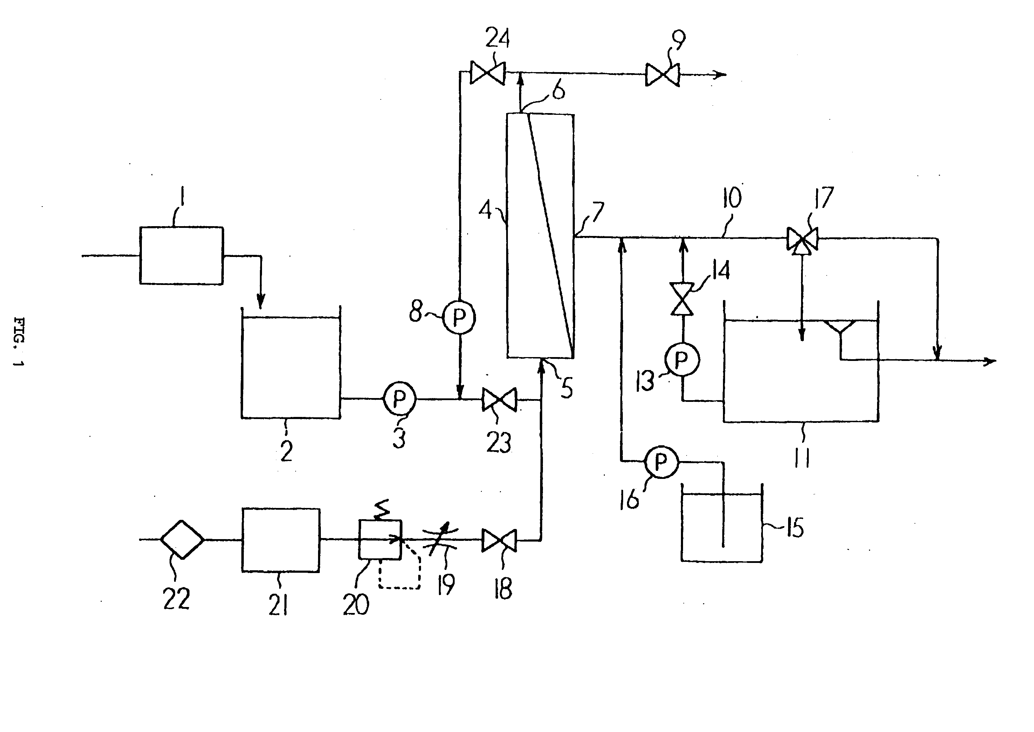

Fig. 1 shows a flow-sheet of the process according to the present invention.

### Detailed Description of the Preferred Embodiments:

The invention will now be described in detail with reference to the accompanying drawings.

In a purification process, raw water, after passing through a pre-filter (1), arrives to a feed tank (2), and is then sent to the internally pressurized hollow fiber type filtration module (4) by means of a feed pump (3). The module, which is not itself the object of the invention, is made of well-known materials, such as polyethylene or acetyl-cellulose hollow fibers assembled into a bundle. The module usually includes a raw water inlet (5), a concentrated water outlet (6) and a filtered water outlet (7). The exhaust of the feed pump is connected to the raw water inlet. The fraction of raw water having passed through the surface of the fibers leaves the filtration module via the filtered water outlet (7). The fraction not passing through the surface of the fibers is enriched in organic and inorganic particles retained by the fibers, and leaves the module via the concentrated water outlet (6). This concentrated water is usually not disposed, but recirculated to the filtration module through a recirculation pump (8) in order to save water, a natural resource. Thus, the filtration module is fed with both raw water and recirculated filtered water in equal flowrates. For example, a module including 500 fibers with an inner diameter of 0.93mm and a length of 700mm is able to filtrate 4m³ a day of water, at a temperature of 25 ° C and under a pressure 0.5kgf/cm². An electromagnetic valve (9) is also provided on the concentrated water outlet (6) in order to dispose water used for the back wash.

Filtered water treated in module (4) is sent through pipe (10) to the distribution water pond after passing a wash water tank (11). This tank, which provides clean water needed for the back wash or for the wash using chemicals, has a capacity of about 50 liters. A back wash water feed pipe (12) connects, through a back wash pump (13) and an electromagnetic valve (14), the bottom of the wash water tank to pipe (10), which is the continuation of the module's filtered water outlet. The drawing corresponds to the case when pressure back wash water is used. When the back wash water is not pressurized, the wash water tank is placed in a somewhat higher position than the filtration module. Moreover, a tank (15) containing the chlorine solution needed for the back wash is connected to pipe (10) between the-filtered water outlet (7) and electromagnetic valve (14), via a solution feed pump (16). The authors were using natrium hypochlorite, but it is also possible to use gaseous chlore, high quality bleaching powder, etc.

When normal filtration is restarted after a back wash, some wash water remains inside the filtration module. If this water, which contains chlore, is sent directly to the wash water tank (11), there is a risk that manganese oxyde forms on the tank wall. For that reason, filtered water is not sent to the wash water tank for a while after the restart, but diverted to another part of the system. In practical cases, as this remaining back wash water is relatively clean and contains chlore used for sterilization, it is sent directly to the water storage pond. The selection of the filtered water circuit is carried out by means of a three-way electromagnetic valve (17) installed on line (10), ahead of the wash water tank. One of the valve exhausts is connected to the wash water tank, and the other to the pipe which sends the overflow of the wash water tank to the water storage pond.

According to the invention, in order to improve the efficiency of the back wash process, air is blown inside the filtration tubes in addition to the wash water injected. It is possible to blow this air either through the concentrated water outlet (6) or the raw water inlet (5). As an example, we will describe here the case where air is blown through the concentrated water outlet (6), and the back wash water or water remaining inside the filtration module as well as blown air are evacuated through the raw water inlet (5). In practical cases, in order to make it possible to blow the air through the concentrated water outlet (6), an air supply line, consisting of an air filter (22), an air compressor (21), a pressure control valve (20), an air flow control valve (19) and an electromagnetic valve (18), is connected to the line down the concentrated water outlet (6). On the opposite side, on the raw water feed line of the module, an electromagnetic valve (23) designed to stop raw water overflows and an electromagnetic valve (24) designed to evacuate through the raw water inlet (5) the air blown inside the fibers on the filtered particles detached from the inner surface and on back wash water having passed trough the fiber pores, are placed between the feed pump (3) and the recirculation pump (8). Moreover, in order to prevent the air blown through the concentrated water outlet (6) to flow into the recirculation line, an electromagnetic valve (25) is placed ahead of the recirculation pump. In order to avoid an overload on the feed pump (3) when electromagnetic valve (23) is closed without stopping the feed pump, a bypass is provided downstream to return raw water to the feed tank.

Usually, river or surface water contains organic matter, iron hydroxides in colloidal or microscopic form as well as manganese ions in very small quantities. This raw water is first passed through a pre-filter (1) to eliminate the large particles, sent to the feed tank (2), and then injected into the filtration module by means of the feed pump. Most of the organic matter and iron hydroxides contained in the water is retained by the pores of the fibers and filtered water is directed to the wash water tank (11). The overflow from the wash water tank is then sterilized and sent to the water distribution pond.

The concentrated water is recycled using the recirculation pump (8) and the raw water is fed into inlet (5) with a flowrate equal to that of the filtered water. Gradually, the inner surface of the tubes becomes clogged, and the pressure differential between raw water inlet (5) and filtered water outlet (7) increases. In order to maintain this differential to a reasonable value, a back wash run is carried out, generally automatically, with an adequate periodicity (for example every 10 to 60 mn).

Conventional wash runs are usually carried out the following way. The electromagnetic valve on concentrated water outlet line is first opened, then three-way valve (17) is closed, and the electromagnetic valve of the back wash line is opened. The natrium hypochlorite solution is then injected so as the chlore concentration of the wash water circulated by pumps (13) and (16) reaches 3 ppm. The water having washed the filtration module flows in concentrated water outlet line and is evacuated through electromagnetic valve (9). At the end of the back wash, wash pump (13) stops automatically, and electromagnetic valves (14) and (9) are closed. To restart the normal filtration process, three-way valve (17) is returned to the "wash water tank" position.

With this system, by repeating the back wash run every 30 mn, the flow of filtrated water is restored in about 45 seconds after having used 10 liters of filtered water under a pressure of 2.5kgf/cm³. In this case, it is necessary to carry out a chemical wash every two month.

According to the invention, during the back wash, air is blown into the filtration fibers in addition to the water injected. First, it is made possible to blow the air at constant pressure and flowrate during the back wash by adjusting the pressure control valve (20) and the air flowrate valve (19). With this system, it is sufficient to work with an air pressure of 0.2 to 0.4kgf/cm² and an air injection flowrate of 45 to 501/mn. Then, unlike the conventional method, electromagnetic valve (9) on the concentrated water outlet line is kept closed, electromagnetic valve (23) on the raw water feed line and electromagnetic valve (25) on the recirculation line are closed, electromagnetic valve (24) on the raw water feed line is opened, and electromagnetic valve (18) on the pressure air supply line is opened. After that, the injection of the wash water and the addition of the chlorine solution are carried out like in the conventional method. When the conditions required are obtained, the back wash is stopped. First, like in the conventional method, the injection of the wash water and the addition of the chloride solution are stopped, then electromagnetic valve (18) on the pressure air supply line and electromagnetic valve (24) connected to the raw water feed line are closed, electromagnetic valve (9) on the concentrated water outlet line is opened, electromagnetic valve (23) on the raw water feed line and electromagnetic valve (25) on the recirculation line are opened simultaneously. The raw water is thus sent to the filtration module and the air contained within is drained. When this drain is over, three-way valve (17) ahead of the wash water tank (11) is switched to the "water distribution pond" position, then electromagnetic valve (9) on the concentrated water outlet line is closed. When the quantity of chlore contained in the filtered water has become negligeable, for example after 15 mn, three-way valve (17) is switched to the "wash water tank" position.

According to the invention, with a wash run operated every 30 mn, a wash pump pressure of 2.5 kgf/cm², an air pressure of 0.4kgf/cm² and air blow flowrate of 451/mn, the duration of the back wash was 30 seconds and the quantity of wash water used was 7 liters, both less than with the conventional method. It was sufficient to carry out the chemical wash only once in four month time.

In other conditions, with a wash run operated every 30 mn, a wash pump pressure of 0.1 kgf/cm² (almost no pressurization), air pressure of 0.2 kgf/cm², and air blow flowrate of 501/mn, the duration of the back wash was again 30 seconds and the quantity of wash water used was 0.3 liter. Again, it was sufficient to carry out the chemical wash once in four month time.

The invention has been described above in the case of a crossflow configuration, but is could also be applied to deadend processes.

As described above, the invention enables to perform in a shouter time and with less water the back wash necessary to remove particles accumulated on the inner surface o the filtration fibers. Moreover, as the process is vary efficient, the periodicity of the chemical wash required to completely clean the module is largely reduced. It also enables to reduce the quantity of chlorine solution required for the process.

A method for back washing of filtration modules using internally pressurized hollow fibers, said method being applied in a water purification process for example. The method requires a shorter time and consumes less water than the conventional one, but is very efficient in removing particles accumulated on the inner surface of the filtration tubes.

In a water purification process using an internally pressurized hollow fiber type filtration module 4 , the turbid raw water containing organic or inorganic matter enters the module for filtration. The exiting filtered water is sent to a wash water tank 11 . When the inner surface of the filtration tubes becomes clogged, a chloride solution is added 15, 16 to the filtered water taken from the wash water tank 11 , and sent to the filtration module to carry out a back wash. According to the invention, in order to remove even more efficiently particles accumulated on the inner surface of the filtration tubes, air is blown 18, 22 through one of the outlets of the filtration module, for example through the concentrated water outlet 6 and evacuated 24 through the raw water inlet 5 . The pressure and flowrate of the air blow is preferably such as the air flow within the tubes is turbulent. The efficiency of the process is high because drops of wash water oozing on the inner surface of the tubes are accelerated by the air flow, knocking on the particles accumulated on the surface and blowing them away.

## Claims

1. A method for back washing an internally pressurized hollow fiber type filtration module whose fibers are clogged by filtered particles accumulated on their inner surface, comprising:
injecting back wash water-pressurized or not-through a filtered water outlet and
blowing air through a first port of the module so as to detach the accumulated particles from the inner surface of the fibers and evacuate the particles through a second port of the module, thereby recovering the filtering capacity of the module.

2. A method according to claim 1, wherein said first port is a concentrated water outlet and said second port is a raw water inlet.

3. A method according to claim 1, wherein said first port is a raw water inlet and said second port is a concentrated water outlet.

4. A method according to any of claims 2 and 3 wherein said blown air is in a flow sufficient to create a turbulent flow in the fibers.

5. A method according to any of claims 1 to 4, wherein a chlorine oxidant solution is added to said back wash water.

6. Apparatus for carrying out a method for back washing an internally pressurized hollow fiber type filtration module according to any of claims 1 to 5.
